# EUROPÄISCHE PATENTSCHRIFT

(11) **EP 0 736 136 B1**
(45) Veröffentlichungstag und Bekanntmachung des Hinweises auf die Patenterteilung: **10.09.1997**
(21) Anmeldenummer: 95905098.0
(22) Anmeldetag: 21.12.1994
(51) Int. Cl.: F01N 9/00

(54) **VERFAHREN ZUR ÜBERPRÜFUNG DER KONVERTIERUNGSFÄHIGKEIT EINES KATALYSATORS**
METHOD FOR TESTING THE CONVERTABILITY OF A CATALYTIC CONVERTER
PROCEDE PERMETTANT DE VERIFIER LE POUVOIR DE CONVERSION D'UN CATALYSEUR

(30) Priorität: 21.12.1993 EP 93120626
(43) Veröffentlichungstag der Anmeldung: 09.10.1996
(73) Patentinhaber: SIEMENS AKTIENGESELLSCHAFT, 80333 München (DE); Bayerische Motoren Werke Aktiengesellschaft, 80788 München (DE)
(72) Erfinder: TREINIES, Stefan, D-97055 Regensburgng (DE); KETTERER, Alexander, D-93047 Regensburg (DE); KRAUSS, Michael, D-81369 München (DE)
(86) Internationale Anmeldenummer: EP9404262
(87) Internationale Veröffentlichungsnummer: WO9517588

(56) Entgegenhaltungen:
- WO-A-92/03642
- US-A- 5 060 474
- PATENT ABSTRACTS OF JAPAN vol. 16, no. 253 (M-1263) 9. Juni 1992 & JP,A,04 060 106 (MAZDA MOTOR CORP) 26. Februar 1992

## Beschreibung

Die vorliegende Erfindung betrifft ein Verfahren zur Überprüfung der Konvertierungsfahigkeit eines Katalysators nach dem Oberbegriff des Patentanspruchs 1.

Zur Umwandlung von schädlichen Bestandteilen in Abgasen von Brennkraftmaschinen werden Katalysatoren eingesetzt, die die in den Abgasen enthaltenen Kohlenwasserstoffe, das Kohlenmonoxid und die Stickstoffe in gesundheitlich unbedenkliche Verbindungen konvertieren. Die Katalysatoren sind im Betrieb harten Bedingungen wie hohen Temperaturen und Erschütterungen ausgesetzt, so daß deren Lebensdauer begrenzt ist. Dies kann während der Lebensdauer eines Kraftfahrzeugs zu einer Verringerung des Konvertierungsgrades des Katalysators führen, was einen Austausch des Katalysators erfordert.

Da die gesetzlichen Abgasvorschriften jedoch während des gesamten Betriebseinsatzes stets erfüllt sein müssen, ist eine Funktionsüberwachung des Katalysators erforderlich. Dabei kann das Überwachungssystem dem Fahrer durch ein optisches oder akustisches Signal anzeigen, wenn der Katalysator nicht mehr einwandfrei arbeitet.

Durch die DE-PS 26 43 739 ist ein Verfahren zur Überwachung der Aktivität von Katalysatoren für die Abgasreinigung bekannt, bei dem zwei Temperaturfühler vorgesehen sind. Ein Temperaturfühler ist im Katalysator angeordnet, der andere stromaufwärts kurz vor dem Katalysator. Dieses bekannte Verfahren nützt die Tatsache aus, daß bei ordnungsgemäß arbeitendem Katalysator aufgrund von exothermen Reaktionen im Katalysator eine Temperaturerhöhung innerhalb des Systems stattfindet, wobei die am Katalysator gemessene Wärmetönung ein Maß für das Arbeiten des Katalysators ist.

Weiterhin ist durch die DE-OS 41 00 397 ein Verfahren und eine Anordnung zur Überwachung des Konvertierungsgrades eines Katalysators bekannt, bei dem die Temperturdifferenz der Temperaturen vor und hinter dem Katalysator erfaßt und ausgewertet wird, die in einer Schubphase der Brennkraftmaschine bei Erzeugung eines Zündaussetzers und Zuführung einer vorgegebenen Kraftstoff-Luft-Gemischmenge auftreten.

Es ist Aufgabe der vorliegenden Erfindung, ein Verfahren zur Überprüfung bzw. Überwachung der Konvertierungsfahigkeit eines Katalysators, insbesondere eines Vorkatalysators vorzustellen, bei dem eine Überprüfung bzw. Überwachung der Funktion des Katalysators möglich ist, ohne in den Katalysator einzugreifen.

Diese Aufgabe wird erfindungsgemäß durch den Patentanspruch 1 gelöst. Vorteilhafte Weiterbildungen sind in den Unteransprüchen gekennzeichnet.

Aufgrund des Übergangs von einem Betriebspunkt mit höherer Last und Drehzahl über eine Schubphase (Auskühlen durch Sauerstoff) in eine Leerlaufphase (Betriebspunkt mit niedriger Last und Drehzahl) sinkt grundsätzlich die Abgastemperatur. Der Katalysator besitzt bezüglich der Temperatur und Konvertierung eine gewisse Speicherwirkung, so daß dieses Absinken der Temperatur mit einem gewissen Zeitversatz nach dem Katalysator gemessen wird.

Das unterschiedliche Temperaturverhalten zwischen einem guten und einem defekten Katalysator ist nur sehr gering. Ein signifikanter Unterschied ist nur zu Beginn einer Leerlaufphase festzustellen, die sich direkt an eine Schubphase mit abgeschalteter Einspritzung anschließt, da sich hier durch den in der Schubphase zugeführten Sauerstoff beim Wiedereinsetzen der Einspritzung eine stark exotherme Reaktion einstellt. Weiterhin sollten aufgrund des geringen Unterschieds vor und während der einzelnen Messungen stabile und stets gleiche Bedingungen vorherrschen. Äußerst zuverlässige Kriterien zur Beurteilung der Konvertierungsfähigkeit eines Katalysators lassen sich dadurch erzielen, wenn jeweils mehrere Messungen in einem vorgegebenen Zeitintervall vorgenommen werden und daraus ein Mittelwert gebildet wird, der dann mit einem Grenzwert verglichen wird.

Das Verfahren ist besonders vorteilhaft auf den ersten Katalysator im Abgastrakt eines Kraftfahrzeugs anwendbar. Dieser kann zweckmäßigerweise durch einen Vorkatalysator gebildet sein, da, wie Untersuchungen gezeigt habe, besonders zuverlässige Meßergebnisse nach dem erfindungsgemäßen Verfahren bei einem Katalysator erzielbar sind, dessen Größe ein gewisses Maß nicht übersteigt.

Da, wie bereits erwähnt, stabile und nahezu gleiche Bedingungen bei den Messungen vorherrschen sowie Störeinflüsse vermieden werden sollen, wird in vorteilhafter Weise die Bestimmung des Temperaturgradienten bei bestimmten Betriebszuständen durchgeführt.

So soll eine Überprüfung des Katalysators nur dann stattfinden, wenn eine Lambdaregelung aktiv ist. Damit werden Störungen durch Gemischeinflüsse vermieden. Es herrscht eine stabile Verbrennung in der Brennkraftmaschine nach Wiedereinsetzen einer Schubabschaltung vor.

Weiter soll eine Überprüfung nur dann vorgenommen werden, wenn keine Sekundärluft in den Katalysator eingeblasen wird. Eine Sekundarlufteinblasung wird zum schnellen Anspringen des Katalysators durchgeführt. Der Katalysator hat zu diesem Zeitpunkt seine Betriebstemperatur noch nicht erreicht. Weiterhin herrscht hier vor dem Katalysator ein mageres Gemisch, so daß der Katalysator nicht arbeitet. Die Überprüfung darf nur durchgeführt werden, wenn sich die Temperatur des Katalysators in dem für die Konvertierung optimalen Temperaturbereich befindet. Die Ermittlung der Katalysator-temperatur kann durch Berechnung über ein in der Motorsteuerung abgelegtes Abgastemperaturmodell erfolgen.

Instabile bzw. instationare Verhältnisse liegen auch dann vor, wenn die Brennkraftmaschine noch nicht ihre Betriebstemperatur erreicht hat. Dies läßt sich durch die Kühlwassertemperatur ermitteln, die einen gewissen Mindestwert aufweisen soll, um mit der Überprüfung des Katalysators zu beginnen.

Um weiter stabile Verhältnisse zu erhalten und damit eine zuverlässige Messung, soll die Fahrgeschwindigkeit des Kraftfahrzeugs in einem gewissen Bereich liegen. Die Fahrgeschwindigkeit hat ein unterschiedlich starkes Auskühlen bei unterschiedlichen Geschwindigkeiten zur Folge, so daß dieser Einfluß unterdrückt werden soll, um gleiche Verhältnisse bei der Überprüfung zu haben.

Der Katalysator besitzt in Bezug auf das Konvertierungs- und Temperaturverhalten eine Speicherwirkung. Um nun während der Überprüfung keine Temperaturveränderungen zu messen, die auf Vorgänge vor der Schubphase zurückzuführen sind, ist es zweckmäßig, wenn vor der Schubphase nahezu stationäre Verhältnisse geherrscht haben.

Die Erfindung wird nun anhand von zwei Figuren näher erläutert.

Es zeigen:
Figur 1 schematisch eine Brennkraftmaschine mit einem Abgastrakt; und
Figur 2 ein Flußdiagramm zur Erläuterung des Verfahrens nach der Erfindung.

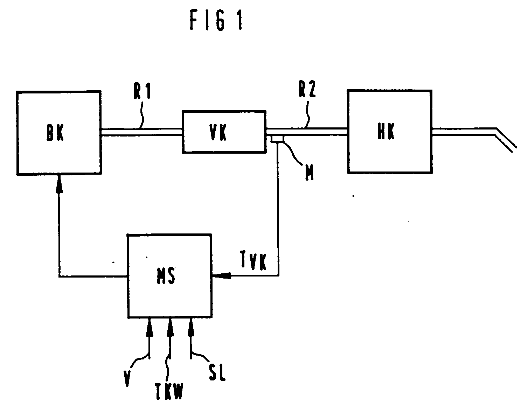

Die Figur 1 zeigt schematisch eine Brennkraftmaschine BK, die über ein erstes Abgasrohr R1 mit einem Vorkatalysator VK und anschließend über ein zweites Abgasrohr R2 mit einem Hauptkatalysator verbunden ist. Stromabwärts hinter dem Vorkatalysator VK ist unmittelbar danach eine Meßstelle M vorgesehen, über die die Abgastemperatur hinter dem Vorkatalysator gemessen werden kann. Der an dieser Stelle gemessene Meßwert wird zur Auswertung gemeinsam mit anderen Meßwerten an einen Rechner wie eine Motorsteuerung geliefert, in der vorbestimmte Prozeduren durchgeführt werden.

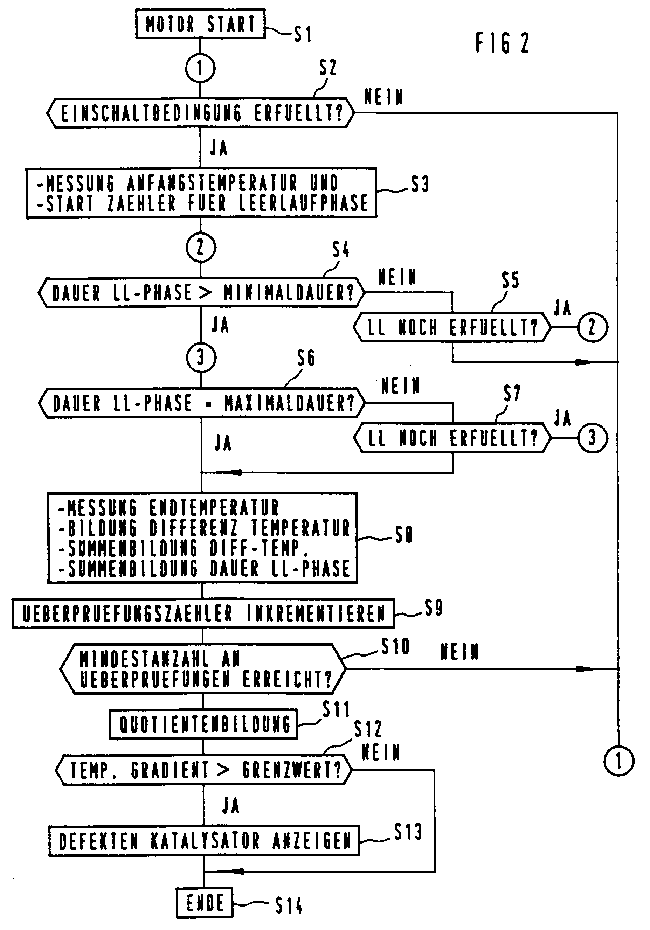

Bei dem in Figur 2 gezeigten Flußdiagramm wird in einem ersten Schritt S1 die Brennkraftmachine gestartet. In einem sich daran anschließenden Schritt S2 wird überprüft, ob die Einschaltebedingungen für die Überprüfung des Katalysators erfüllt sind. Darunter sind die Betriebsbedingungen zu verstehen, ob die Lambdaregelung aktiv ist, der Sekundärluftbetrieb nicht aktiv ist, die Betriebstemperatur der Brennkraftmaschine erreicht ist, die Fahrgeschwindigkeit des Kraftfahrzeugs in einem vorgegebenen Bereich sich befindet und ob die betriebstationären Bedingungen vor dem Eintritt in die Schubphase erfüllt sind. Ist dies nicht der Fall, kehrt die Routine zu 1 zurück. Sind die Einschaltebedingungen erfüllt, so schreitet die Routine zu einem Schritt S3, wo die Temperatur (Anfangstemperatur) zu Beginn der Leerlaufphase (LL-Phase) nach dem Schubbetrieb gemessen wird. Gleichzeitig wird ein Zahler für die Dauer der Leerlaufphase gestartet. In einem sich anschließenden Schritt S4 wird entschieden, ob die Dauer der Leerlaufphase größer als eine Minimaldauer ist. Wenn "Nein" entschieden wird, schreitet die Routine zu einem Schritt S5, wo überprüft wird, ob die Bedingung für den Leerlauf noch erfüllt ist. Wenn "Ja" entschieden wird, kehrt die Routine zu 2 zurück. Wenn "Nein" entschieden wird, kehrt die Routine zum Anfang der Routine , d.h. zu 1 zurück. Ist die Dauer der Leerlaufphase größer als die Minimaldauer, so schreitet die Routine zu einem Entscheidungsschritt S6 weiter, wo entschieden wird, ob die Dauer der Leerlaufphase gleich der Maximaldauer ist. Wenn bei S6 "Nein" entschieden wird, schreitet die Routine zu einem Schritt S7, wo entschieden wird, ob die Bedingung für den Leerlauf noch erfüllt ist. Wenn bei S7 "Ja" entschieden wird, kehrt die Routine zu 3 zurück. Wenn "Nein" entschieden wird, schreitet die Routine zu einem Schritt S8.

Wenn bei Schritt S6 "Ja" entschieden wird, schreitet die Routine unmittelbar von S6 zu einem Schritt S8. In diesem Schritt S8 wird die Temperatur am Ende der Leerlaufphase gemessen. Weiter wird die Differenz zwischen der Endtemperatur und der Anfangstemperatur ermittelt und alle Differenzen werden aufsummiert. In diesem Schritt wird die Gesamtdauer aller Leerlaufphasen ermittelt. Im Schritt S9 wird ein Überprüfungszähler inkrementiert. Im sich anschließenden Schritt S10 wird entschieden, ob die Mindestanzahl von Überprüfungen erreicht ist. Wenn dies nicht der Fall ist, kehrt die Routine zu 1 zurück. Wenn die Mindestanzahl von Überprüfungen erreicht ist, wird in einem Schritt S11 der Quotient aus der Gesamtsumme der Differenz- Temperaturmeßergebnisse zur Gesamtsummendauer der Messungen gebildet, um einen resutierenden Temperaturgradienten zu erhalten. Im sich daran anschließenden Schritt S12 wird entschieden, ob der resultierende Temperaturgradient großer als ein Grenzwert ist. Wenn "Ja" entschieden wird, ist der Katalysator defekt bzw. er erfüllt nicht mehr seine Mindestanforderungen, was in einem Schritt S13 angezeigt wird. Wenn "Nein" entschieden wird, schreitet die Routine zu einem Endeschritt S14 weiter.

Die Überprüfung wird im allgemeinen einmal pro Motorlauf durchgeführt.

## Patentansprüche

1. Verfahren zur Überprüfung der Konvertierungsfähigkeit eines im Abgastrakt angeordneten Katalysators in Kraftfahrzeugen mit Brennkraftmaschinen mittels einer Temperaturmessung im Abgastrakt in unmittelbarer Nähe stromabwärts des Katalysators, insbesondere zur Überprüfung eines ersten Katalysators,
**gekennzeichnet durch** folgende Schritte:
(a) Messen der Temperatur jeweils am Beginn und am Ende einer vorgegebenen Anzahl von Leerlaufphasen als Bezugsphasen im Anschluß an eine Schubphase bei vorgegebenen Betriebszuständen des Kraftfahrzeugs und/oder der Brennkraftmaschine;
(b) Bilden des Differenzbetrags aus den Temperaturmessungen am Anfang und am Ende jeder Bezugsphase;
(c) Bildung der Gesamtsumme aller Differenzbeträge und einer Zeitsumme aus den Dauern der Bezugsphasen;
(d) Bilden eines Durchschnittstemperaturgradienten aus der Gesamtsumme und der Zeitsumme;
(e) Vergleichen des Durchschnittstemperaturgradienten mit einem vorgegebenen Grenzwert; und
(f) Erkennen des Katalysators als fehlerhaft, wenn der Durchschnittstemperaturquotient den Grenzwert übersteigt.

2. Verfahren nach Anspruch 1, dadurch gekennzeichnet, daß die folgenden Betriebszustände oder zumindest einige davon vorliegen:
(a) eine Lambdaregelung ist aktiv;
(b) ein Sekundärluftbetrieb ist nicht aktiv;
(c) die Betriebstemperatur der Brennkraftmaschine befindet sich im richtigen Bereich;
(d) die Fahrzeuggeschwindigkeit des Kraftfahrzeugs ist beim Eintritt in die Leerlaufphase kleiner als ein Maximalwert;
(e) für einen vorgegebenen Zeitraum müssen betriebsstationäre Bedingungen vor Eintritt in die Schubphase erfüllt sein; und
(f) die berechnete Katalysatorersatztemperatur befindet sich in einem vorgegebenen Temperaturbereich.

3. Verfahren nach Anspruch 1, dadurch gekennzeichnet, daß die Leerlaufphase jeweils auf eine Schubphase mit abgeschalteter Einspritzung erfolgt.

4. Verfahren nach Anspruch 1, dadurch gekennzeichnet, daß die Betriebszustände in einem Rechner ausgewertet werden und der Überprüfungsbeginn durch den Rechner bestimmt wird.

5. Verfahren nach Anspruch 4, dadurch gekennzeichnet, daß der Rechner durch eine vorhandene Motorsteuerung gebildet ist.

## Claims

1. Method for checking the conversion capability of a catalyzer arranged in the exhaust duct in motor vehicles with internal combustion engines by means of a temperature measurement in the exhaust duct immediately downstream of the catalyzer, in particular for checking a first catalyzer, characterized by the following steps:
a) measurement of the temperature in each case at the beginning and at the end of a predetermined number of idling phases as reference phases, following an overrun phase and given predetermined operating states of the motor vehicle and/or of the internal combustion engine;
b) formation of the difference of the temperature measurements at the beginning and end of each reference phase;
c) formation of the total sum of all the differences and a time sum from the durations of the reference phases;
d) formation of an average temperature gradient from the total sum and the time sum;
e) comparison of the average temperature gradient with a predetermined limiting value; and
f) recognition that the catalyzer is defective if the average temperature quotient exceeds the limiting value.

2. Method according to Claim 1, characterized in that the following operating states, or at least some of them, are present:
a) a lambda closed-loop control system is active;
b) secondary air operation is not active;
c) the operating temperature of the internal combustion engine is in the correct range;
d) the vehicle speed of the motor vehicle is lower than a maximum value upon entry into the idling phase;
e) conditions of steady-state operation must hold for a predetermined period before entry into the overrun phase; and
f) the calculated catalyzer equivalent temperature is in a predetermined temperature range.

3. Method according to Claim 1, characterized in that the idling phase in each case follows an overrun phase with the injection switched off.

4. Method according to Claim 1, characterized in that the operating states are evaluated in a computer and the beginning of checking is determined by the computer.

5. Method according to Claim 4, characterized in that the computer is formed by an existing engine controller.

## Revendications

1. Procédé de vérification de la capacité de conversion d'un catalyseur disposé dans le collecteur de gaz d'échappement, dans des véhicules automobiles comportant des moteurs à combustion interne, au moyen d'une mesure de température dans le collecteur de gaz d'échappement, en aval du catalyseur et en son voisinage immédiat, en particulier pour la vérification d'un premier catalyseur,
caractérisé par les étapes suivantes:
(a) mesurer chaque fois les températures au début et à la fin d'un nombre prédéfini de phases de ralenti, sous la forme de phases de référence se raccordant à une phase de fonctionnement sur la lancée, dans des conditions prédéfinies de fonctionnement du véhicule automobile et/ou du moteur à combustion interne;
(b) calculer le montant des différences des mesures des températures au début et à la fin de chaque phase de référence;
(c) calculer la somme totale de tous les montants de différence et une somme des temps à partir des durées des phases de référence;
(d) calculer un gradient de température moyen à partir de la somme totale et de la somme des temps;
(e) comparer le gradient de température moyen à une valeur de limite prédéfinie; et
(f) reconnaître le catalyseur comme défectueux si le gradient de température moyen dépasse la valeur de limite.

2. Procédé suivant la revendication 1, caractérisé en ce que sont présents les états de fonctionnement suivants, ou au moins une partie de ceux-ci:
(a) une régulation lambda est active;
(b) un fonctionnement en air secondaire n'est pas actif;
(c) la température de fonctionnement du moteur à combustion interne se trouve dans la zone correcte;
(d) la vitesse du véhicule automobile est, à l'entrée dans la phase de ralenti, plus petite qu'une valeur maximale;
(e) pour une période de temps donnée, des conditions de fonctionnement stationnaires doivent être remplies avant l'entrée dans la phase de fonctionnement sur la lancée;
(f) la température de remplacement du catalyseur calculée se trouve dans une gamme de températures prédéfinie.

3. Procédé suivant la revendication 1, caractérisé en ce que la phase de ralenti a lieu chaque fois après une phase de fonctionnement sur la lancée avec coupure de l'injection.

4. Procédé suivant la revendication 1, caractérisé en ce que les états de fonctionnement sont exploités dans un calculateur et que le début de la vérification est déterminé par le calculateur.

5. Procédé suivant la revendication 4, caractérisé en ce que le calculateur est constitué par un dispositif de commande existant du moteur.
